Europäisches Patentamt

European Patent Office

Office européen des brevets

(19)

Publication number: **0 285 309**
**A2**

## EUROPEAN PATENT APPLICATION

(21) Application number: 88302515.7

(22) Date of filing: 22.03.88

(51) Int. Cl.⁴: **G06F 12/14**

(30) Priority: 28.03.87 JP 73002/87

(43) Date of publication of application:
**05.10.88 Bulletin 88/40**

(84) Designated Contracting States:
**DE FR GB**

(71) Applicant: **KABUSHIKI KAISHA TOSHIBA**
**72, Horikawa-cho Saiwai-ku**
**Kawasaki-shi Kanagawa-ken 210(JP)**

(72) Inventor: **Maeda, Ken-ichi c/o Patent Division**
**Kabushiki Kaisha Toshiba 1-1 Shibaura**
**1-chome**
**Minato-ku Tokyo 105(JP)**
Inventor: **Saito, Mitsuo c/o Patent Division**
**Kabushiki Kaisha Toshiba 1-1 Shibaura**
**1-chome**
**Minato-ku Tokyo 105(JP)**
Inventor: **Aikawa, Takeshi c/o Patent Division**
**Kabushiki Kaisha Toshiba 1-1 Shibaura**
**1-chome**
**Minato-ku Tokyo 105(JP)**
Inventor: **Matoba, Tsukasa c/o Patent Division**
**Kabushiki Kaisha Toshiba 1-1 Shibaura**
**1-chome**
**Minato-ku Tokyo 105(JP)**
Inventor: **Okamura, Mitsuyoshi c/o Patent**
**Division**
**Kabushiki Kaisha Toshiba 1-1 Shibaura**
**1-chome**
**Minato-ku Tokyo 105(JP)**

(74) Representative: **Freed, Arthur Woolf et al**
**MARKS & CLERK 57-60 Lincoln's Inn Fields**
**London WC2A 3LS(GB)**

(54) **Memory protection apparatus for use in an electronic calculator.**

(57) A memory protection apparatus for use in an electronic calculator refers to a table (5) having access permission/inhibition defined in advance, for a combination of an access bit from a processor (1) and a protection bit that indicates the type of a memory (3) region of a memory to be accessed. Based on the reference result, an access request from the processor to the memory is controlled.

FIG. 1

# Memory protection apparatus for use in an electronic calculator

The present invention relates to a memory protection apparatus for use in an electronic calculator, which prevents the contents of the memory region adjacent to a selected memory region from being erroneously rewritten as a result of the adjacent memory region being accidently accessed at the time the selected memory region is accessed.

In electronic calculators, ring type execution levels are allotted as logical program units such as modes, and memory protection is designed not to cause a lower level ring to access a memory region assigned to a higher level ring. For instance, according to the computer language PROLOG, when a plurality of stack regions, such as a heap, local stack and trail, are used, each stack may extend to a different stack region, thus damaging that region. It is therefore necessary to provide some measure to prevent this incident.

Conventionally, the following methods have been used to realize memory protection:

One method involves checking a stack pointer by means of software. However, since according to this method, a stack pointer must be referred to each time a memory access operation is initiated by a processor, increases the execution time.

Another method involves using a memory management unit (MMU) which performs memory management between a logical address and a physical address in a virtual memory, so as to separate contexts of memory regions. Since the MMU is under the control of an operation system (OS), however, the switching between memory regions, performed by the MMU, inevitably and undesirably increases the load of the OS.

Yet another method involves using a system-protection bit or a write protection bit. The system-protection bit, however, is limited by its one way memory protection; it can inhibit the accessing to a system by a user, but not the accessing to the user by the system. The write-protection bit, when assigned to a memory region, inhibits data writing in any part of that memory region. This protection bit is not therefore suitable for prevention of mutual interference between divided areas of a memory region.

In general, it is necessary to properly select accessible memory regions in accordance with the type of memory access. For instance, with regard to accessing to a user mode. it is necessary to allow for access to the memory regions of a user mode, user data and user codes, but not the memory region of a system mode. As regards access to user data, accessing to the memory regions of a user mode and user data must be allowed. while accessing to the memory region of a user code and a system mode should be inhibited. Further. regarding access to a user code. accessing to a user mode and a user code must be allowed. while accessing to the memory regions of a user data and a system mode must be inhibited. However. the conventional system of using the write protect bit could not prevent mutual interference between memory regions which would occur because permission/inhibition of accessing to these memory regions has been set based on the type of the access and the accessed regions.

As described above, the conventional memory protection methods result in reduction in the execution speed and increase in the burden of an OS or cannot avoid causing mutual interference between a plurality of memory regions.

It is therefore an object of this invention to provide a memory protection apparatus for use in an electronic calculator, which does not reduce the execution speed nor increase the burden of the OS, nor causes mutual interference between plural memory regions.

To achieve the above object, the memory protection apparatus according to this invention comprises:

a processor for producing an access bit indicating a type of access to a memory, means for producing a protection bit indicating a type of a memory region of the memory to be accessed, in accordance with an access request from the processor, bit reference table means containing access permission and access inhibition defined in advance for each combination of access bits and protection bits; and access control means for making an access request to the memory, based on the combination of the access bit and protection bit, attained by referring to the bit reference table means.

The memory protection apparatus according to this invention has a reference table having definitions of access permission/inhibition for all combinations of different types of bits, namely, the access bits that indicate the types of access to the memory and the protection bits that indicate the types of accessed memory regions. and can execute the access control by referring this table. Therefore, the execution speed attainable by this apparatus is significantly greater than that which can be attained by a conventional software-based access control system. In addition. since access control is not entirely dependent on the MMU. an OS can be relieved of unnecessary burden. Furthermore, since access permission inhibition can be flexibly set in this table with respect to any combination of the access and protection bits. mutual interference between divided memory regions can be effectively prevented.

This invention can be more fully understood from the following detailed description when taken in conjunction with the accompanying drawings, in which:

Fig. 1 is a block diagram illustrating the arrangement of an electronic calculator memory protection apparatus according to an embodiment of this invention;

Fig. 2 is a diagram illustrating an example of a bit reference table as shown in Fig. 1;

Fig. 3 is a diagram for explaining the operation of the memory protection apparatus of this invention;

Fig. 4 is a diagram illustrating another example of the bit reference table as shown in Fig. 1; and

Fig. 5 is a block diagram illustrating another arrangement of the memory protection apparatus of this invention.

An embodiment of this invention will now be explained, with reference to the accompanying drawings.

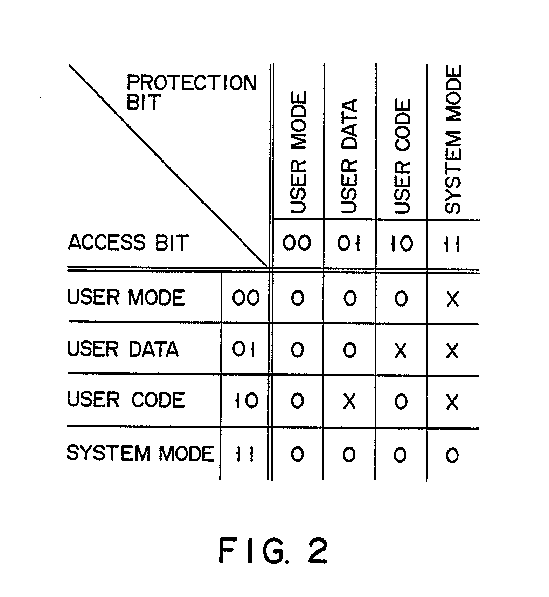

A logical address output from a processor 1 and data are supplied to an MMU 2. MMU 2 converts the logical address from processor 1 into a physical address as well as performing memory management fanctions, which include swapping of data between primary and secondary memories. The physical address from MMU 2 is supplied to memory 3. A page number included in the logical address of MMU 2 is sent to a page map 4, which stores a start address of each page on memory 3 and a protection bit indicating the type of this page. This protection bit is sent to a bit reference table 5 as its one input. The bit reference table 5 is also supplied with an access bit from processor 1, which indicates the type of access. Bit reference table 5 may be constituted as shown in Fig. 2. In this table, each of the access and protection bits is constituted by two-bit data; "00," "01," "10" and "11" respectively indicate a user mode, user data, a user code and a system mode. In the table, "O" indicates access permission and "X" indicates access inhibition. Data indicating the access permission/inhibition is supplied to an access controller 6, which sends out a bus error signal to processor 1 or sends an access request from processor 1 to memory 3 based on the access permission/inhibition data.

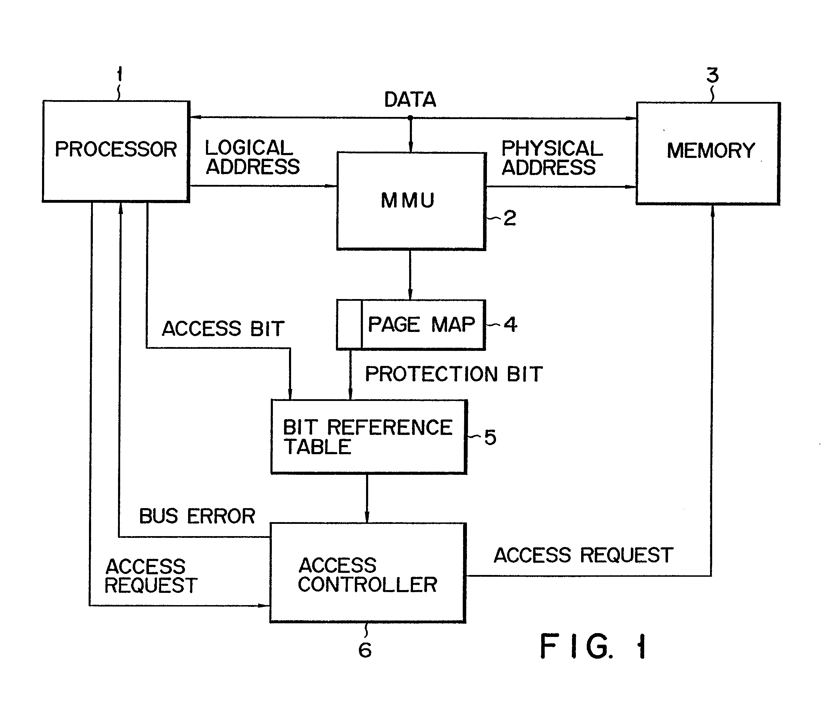

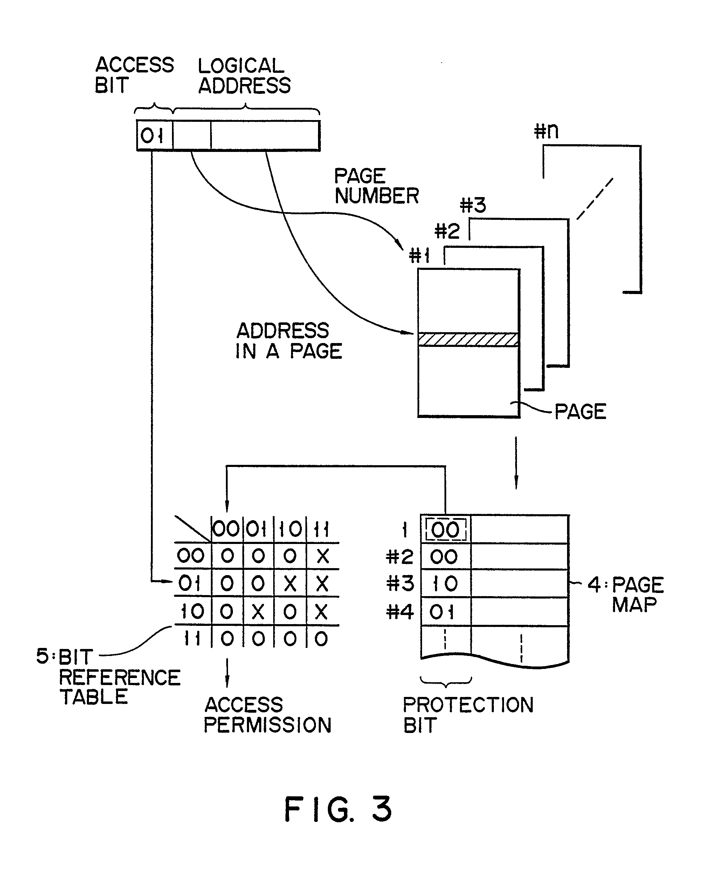

Fig. 3 illustrates the flow of the operation of the memory protection apparatus shown in Fig. 1.

The logical address from processor 1 is affixed with an access bit that indicates the type of access, and its higher bits indicate a page number and lower bits indicate an address in the page. Accordingly, memory access is made to the specified address within the page specified by the logical address. Access permission or inhibition is determined as follows.

As a protection bit for the higher bits associated with a page number is stored in page map 4, giving the page number to page map 4 from MMU 2 will cause the page map to output the associated protection bit. When the combination of this protection bit and the access bit affixed to the logical address is referred in bit reference table 5, access permission or inhibition for the intended access operation can be determined.

It is desirable that the access permission/inhibition be effected in an exception handling of processor 1. Therefore, a bus error signal is returned to processor 1.

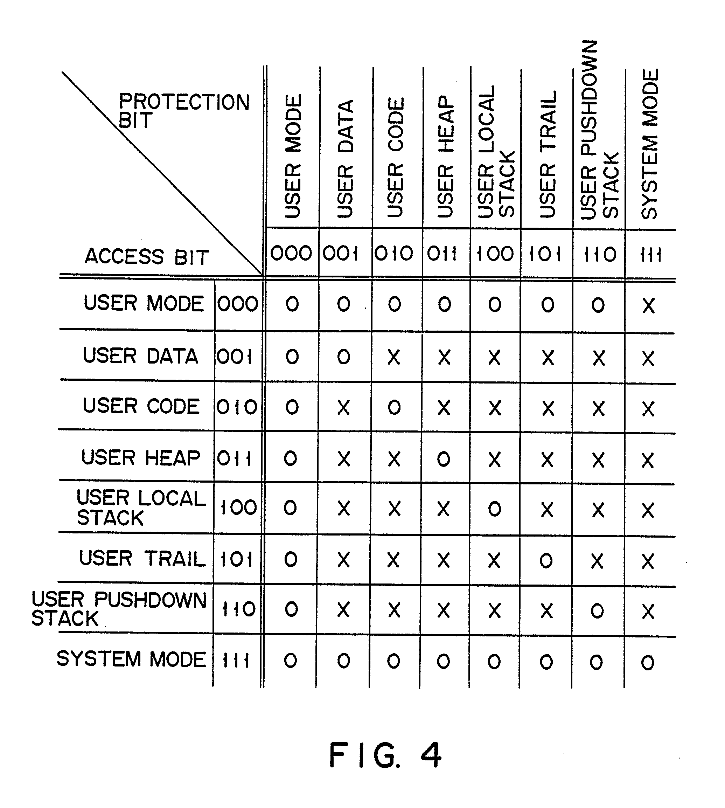

The present invention is not limited to the above embodiment. For instance, Fig. 4 illustrates an example of the bit reference table in which the protection and access bits are each constituted by 3bit data as is the case in PROLOG. In this case, "000," "001," "010," "011," "100," "101," "110" and "111" respectively correspond to a user mode, user data, a user code, a user heap, a user local stack, a user trail, a user push-down stack and a system mode.

In this case, the table contains the following combinations of the protection and access bits.

1) The combinations of these two types of bits, which inhibit access to those protection and access bits defined as a condition for access inhibition when these two bits are replaced with each other. For example, when the protection bit is a user code and access bit is a user data, accessing to the memory is inhibited. While, if the protection bit is a user data and access bit is a user code, the accessing is also inhibited.

2) The combinations which permit access to any access bit with respect to a specific protection bit.

3) The combinations which inhibit access to any of those access bits except a specific access bit with respect to a specific protection bit.

4) The combinations including that access bit which permits all the protection bits except a specific protection bit.

As the number of combinations of the protection and access bits available is increased, the effect of this invention is further increased.

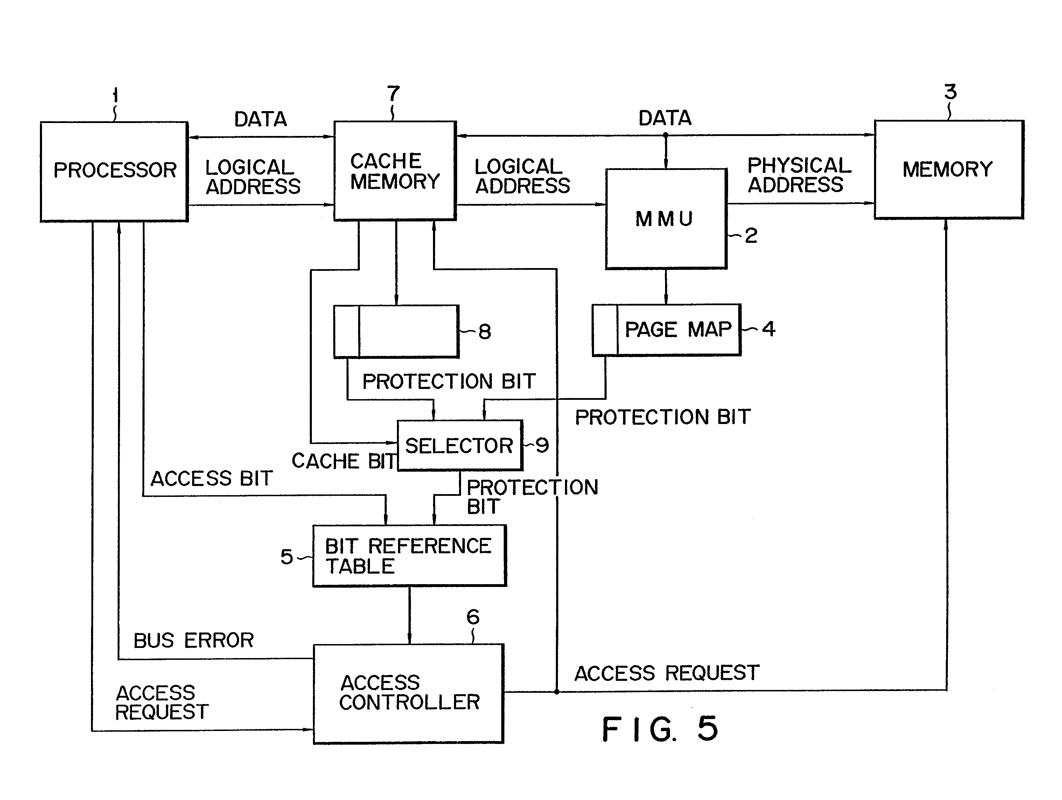

This invention can apply to an apparatus shown in Fig. 5, which has a cache memory 7 added between processor 1 and MMU 2. This cache memory 7, serving as a small, high-speed buffer, is effective when the processing speed of memory 3 is slow.

According to this embodiment, the protection bit of MMU 2 should desirably be copied in a tag 8 included in cache memory 7. A selector 9 selects the protection bit of either cache memory 7 or MMU 2 depending on the presence of a cache bit. The selected protection bit is correlated with the access bit from processor 1 in bit reference table 5.

Needless to say, this invention can apply to the system where a memory region is divided into segments with variable lengths as well as the aforementioned fixed-length paging system.

## Claims

1. A memory protection apparatus for use in an electronic calculator, said apparatus comprising:

a processor for producing an access bit indicating a type of access to a memory;

protection bit-producing means for producing a protection bit indicating a type of a memory region of said memory to be accessed, in accordance with an access request from said processor;

bit reference table means containing access-permission and access-inhibition defined in advance for each combination of access bits and protection bits; and

access control means for making an access request to said memory, on the basis of the combination of the access bit and protection bit attained by referring to said bit reference table means.

2. The apparatus according to claim 1, characterized in that said protection bit-producing means is a page map for producing a protection bit indicating a type of a memory region of said memory as a type of a page, on the basis of a command from a memory management unit.

3. The apparatus according to claim 1, characterized in that said bit reference table means includes at least one combination of said protection bit and said access bit, which inhibits access to both of said access and protection bits, when those protection and access bits which are defined as conditions for access inhibition are replaced with each other.

4. The apparatus according to claim 1, characterized in that said bit reference table means includes a combination of said protection and access bits, which permits access to any access bit with respect to a specific protection bit.

5. The apparatus according to claim 1, characterized in that said bit reference table means includes a combination of said protection and access bits, which inhibits access to any access bit except a specific access bit with respect to a specific protection bit.

6. The apparatus according to claim 1, characterized in that said bit reference table means includes an access bit which permits access to any protection bit except a specific protection bit.

7. A memory protection apparatus for use in an electronic calculator, said apparatus comprising:

a processor for producing an access bit indicating a type of access to a memory;

means for producing a protection bit indicating a type of a memory region of said memory to be accessed, in accordance with an access request from said processor;

a cache memory coupled between said processor and said memory to be accessed, and having a tag for copying a protection bit;

page map means for storing a protection bit indicating a type of an accessed memory region of said memory, in accordance with an access request from said processor;

means for comparing said protection bit from said cache memory and said protection bit from said page map means and selecting one of said compared protection bits;

bit reference table means containing access-permission and access-inhibition defined in advance for each combination of access bits and protection bits; and

access control means for making an access request to said memory, on the basis of the combination of the access bit and protection bit attained by referring said bit reference table means.

8. The apparatus according to claim 7, characterized in that said page map means produces said protection bit on the basis of a command from a memory management unit coupled to said processor and said memory.

9. The apparatus according to claim 7, characterized in that said bit reference table means includes at least one combination of said protection bit and said access bit, which inhibits access to both of said access and protection bits, when those protection and access bits which are defined as conditions for access inhibition are replaced with each other.

10. The apparatus according to claim 7, characterized in that said bit reference table means includes a combination of said protection and access bits, which permits access to any access bit with respect to a specific protection bit.

11. The apparatus according to claim 7, characterized in that said bit reference table means includes a combination of said protection and access bits, which inhibits access to any access bit except a specific access bit with respect to a specific protection bit.

12. The apparatus according to claim 7. characterized in that said bit reference table means includes an access bit which permits access to any protection bit except a specific protection bit.

DATA

PROCESSOR

LOGICAL
ADDRESS

MMU

~2

PHYSICAL
ADDRESS

MEMORY

ACCESS BIT

PAGE MAP ~4

PROTECTION BIT

BIT REFERENCE
TABLE ~5

BUS ERROR

ACCESS
REQUEST

ACCESS
CONTROLLER

ACCESS REQUEST

6

FIG. 1

0 285 309

| PROTECTION BIT ACCESS BIT | | USER MODE 00 | USER DATA 01 | USER CODE 10 | SYSTEM MODE 11 |
|---|---|---|---|---|---|
| USER MODE | 00 | O | O | O | X |
| USER DATA | 01 | O | O | X | X |
| USER CODE | 10 | O | X | O | X |
| SYSTEM MODE | 11 | O | O | O | O |

# FIG. 2

ACCESS BIT

LOGICAL ADDRESS

| 0 1 | | |

#n

PAGE NUMBER

#3

#2

#1

ADDRESS IN A PAGE

PAGE

| | 00 | 01 | 10 | 11 |
|---|---|---|---|---|
| 00 | 0 | 0 | 0 | X |
| 01 | 0 | 0 | X | X |
| 10 | 0 | X | 0 | X |
| 11 | 0 | 0 | 0 | 0 |

5:BIT REFERENCE TABLE

ACCESS PERMISSION

| 1 | 00 | |
|---|---|---|
| #2 | 00 | |
| #3 | 10 | |
| #4 | 01 | |
| ⋮ | ⋮ | ⋮ |

4:PAGE MAP

PROTECTION BIT

FIG. 3

| PROTECTION BIT ⟍ ACCESS BIT | | USER MODE | USER DATA | USER CODE | USER HEAP | USER LOCAL STACK | USER TRAIL | USER PUSHDOWN STACK | SYSTEM MODE |
|---|---|---|---|---|---|---|---|---|---|
| | | 000 | 001 | 010 | 011 | 100 | 101 | 110 | 111 |
| USER MODE | 000 | O | O | O | O | O | O | O | X |
| USER DATA | 001 | O | O | X | X | X | X | X | X |
| USER CODE | 010 | O | X | O | X | X | X | X | X |
| USER HEAP | 011 | O | X | X | O | X | X | X | X |
| USER LOCAL STACK | 100 | O | X | X | X | O | X | X | X |
| USER TRAIL | 101 | O | X | X | X | X | O | X | X |
| USER PUSHDOWN STACK | 110 | O | X | X | X | X | X | O | X |
| SYSTEM MODE | 111 | O | O | O | O | O | O | O | O |

FIG. 4

FIG. 5